# EUROPÄISCHE PATENTSCHRIFT

(11) **EP 2 358 577 B1**
(45) Veröffentlichungstag und Bekanntmachung des Hinweises auf die Patenterteilung: **28.11.2012**
(21) Anmeldenummer: 09760746.9
(22) Anmeldetag: 20.11.2009
(51) Int. Cl.: B62D 1/19

(54) **LENKSÄULE FÜR EIN KRAFTFAHRZEUG**
STEERING COLUMN FOR A MOTOR VEHICLE
COLONNE DE DIRECTION POUR UN VEHICULE AUTOMOBILE

(30) Priorität: 18.12.2008 DE 102008062706
(43) Veröffentlichungstag der Anmeldung: 24.08.2011
(73) Patentinhaber: ThyssenKrupp Presta Aktiengesellschaft, 9492 Eschen (LI)
(72) Erfinder: SCHNITZER, Rony, FL-9491 Ruggell (LI)
(74) Vertreter: Hofmann, Ralf U.
(86) Internationale Anmeldenummer: PCT/EP2009/008270
(87) Internationale Veröffentlichungsnummer: WO 2010/069448

(56) Entgegenhaltungen:
- EP-A1- 0 849 141
- GB-A- 2 244 032
- GB-A- 2 350 329
- US-A1- 2007 069 513

## Beschreibung

Die Erfindung bezieht sich auf eine verstellbare Lenksäule für ein Kraftfahrzeug mit einem Halteteil, das an der Karosserie des Kraftfahrzeugs befestigbar ist, und einem gegenüber dem Halteteil verstellbaren Stellteil, das einen Abschnitt der Lenkspindel drehbar lagert, der an ein lenkradseitiges Ende der Lenkspindel anschließt, welches bei der Verstellung des Stellteils gegenüber dem Halteteil zwischen einer ersten Endposition und einer zweiten Endposition über einen Stellweg verstellbar ist, wobei über zumindest einen Teil des Stellweges gekoppelt eine Verstellung des lenkradseitigen Endes in eine Richtung einer Längenverstellung der Lenksäule und in eine in einer jeweiligen Stellposition des Stellteils rechtwinkelig zur Längsachse des an das lenkradseitige Ende anschließenden Abschnitts der Lenkspindel liegende Richtung einer Höhen- bzw. Neigungsverstellung der Lenksäule erfolgt und am Stellteil oder am Halteteil ein vorderer Führungsbolzen gehalten ist, der in mindestens ein im anderen dieser beiden Teile vorgesehenes vorderes Langloch eingreift.

Verstellbare Lenksäulen sind in unterschiedlichen Ausführungsformen bekannt. Die Verstellbarkeit der Lenksäule, um die Position des Lenkrades zu verstellen, stellt eine Komfortfunktion für den Fahrer dar.

Neben nur längsverstellbaren Lenksäulen und nur neigungs- bzw. höhenverstellbaren Lenksäulen sind auch sowohl längs- als auch höhen- bzw. neigungsverstellbare Lenksäulen bekannt.

Sowohl in der Länge als auch in der Neigung bzw. Höhe verstellbare Lenksäulen geht beispielsweise aus der EP 1 364 856 A1 hervor. Ein Spannbolzen einer Feststelleinrichtung, mit der die eingestellte Position der Lenksäule arretierbar ist, durchsetzt sich kreuzende Langlöcher in einem chassisfesten Halteteil und in einem zur Einstellung der Position der Lenksäule demgegenüber verstellbaren Stellteil, welches einen Abschnitt der Lenkspindel drehbar lagert der Verstellung der Neigung bzw. Höhe wird der Spannboizen in diese Richtung sich erstreckenden Langlöchern verschoben, wobei sich das Stellteil um einen Achsbolzen verschwenkt, der weiter vom lenkradseitigen Ende der Lenkspindel entfernt ist als der Spannbolzen. Um eine Längsverstellung der Lenkspindel zu ermöglichen, ist der chassisfeste Achsbolzen in Langlöchern des Stellteils verschiebbar geführt, die sich parallel zur Achse der Lenkspindel erstrecken und parallel zu den vom Spannbolzen durchsetzten und zur Längsverstellung dienenden Langlöchern im Stellteil liegen. Die Einstellung der Länge und der Neigung bzw. Höhe kann hier unabhängig voneinander erfolgen.

Eine ähnliche Konstruktion geht auch aus der US 6,189,405 B1 hervor, wobei hier der weiter vom lenkradseitigen Ende entfernt liegende Bolzen sowohl in parallel zur Längsachse der Lenkspindel liegenden Langlöchern des Stellteils als auch in rechtwinkelig hierzu sich erstreckenden Langlöchern im chassisfesten Halteteil verschiebbar geführt ist. Dieser Bolzen stellt einen Spannbolzen einer weiteren Feststeileinrichtung dar, die mit der Feststelleinrichtung gekoppelt ist, von der der weiter lenkradseitig liegende Spannbolzen ein Teil ist. Es ergeben sich durch diese, allerdings recht aufwendige Konstruktion, zusätzliche Verstellmöglichkeiten des Lenkrads.

Aus der EP 0 671 308 B1 und EP 0 440 698 B1 gehen weiters sogenannte "head tilt" - Lenksäulen hervor. Der Achsbolzen, um den die Schwenkachse der Höhen- bzw. Neigungsverstellung erfolgt, liegt hier näher beim lenkradseitigen Ende als der Spannbolzen, wodurch sich ein großer Stellbereich für die Höhen- bzw. Neigungsverstellung ergibt. Dadurch kann das Lenkrad beim Ein- und Aussteigen nach oben weggeschwenkt werden. Die Ebene, in der das Lenkrad liegt, ändert sich hier bei der Höhen- bzw. Neigungsverstellung aufgrund der Nähe der Schwenkachse zum Lenkrad stark.

Eine ähnliche Lenksäule geht auch aus der EP 121 506 B1 hervor. Das chassisfeste Halteteil weist hier aber eine größere Fensterausnehmung auf, in welcher der Spannbolzen frei bewegt werden kann, um die Längsverstellung und die Höhen- bzw. Neigungsverstellung durchzuführen.

Eine Lenksäule der eingangs genannten Art geht aus der DE 10 2004 011 657 A1 hervor. Die Längsverstellung und die Höhen- bzw. Neigungsverstellung erfolgen gekoppelt. Zu diesem Zweck greift ein am Stellteil angebrachter Führungsbolzen in ein im Halteteil vorgesehenes gekrümmt verlaufendes Langloch ein. Die Neigungs- bzw. Höhenverstellung erfolgt um einen Achsbolzen, über den eine Lagerhülse verschwenkbar gegenüber dem Halteteil gelagert ist. Die Lagerhülse lagert ihrerseits die Lenkspindel in einem Bereich, der weiter vom lenkradseitigen Ende als der vom Stellteil gelagerte Bereich entfernt ist.

Aus der US 2007/0069513 A1 geht eine verstellbare Lenksäule hervor, bei der am Stellteil vordere und hintere Führungsbolzen gehalten sind, die in vordere und hintere Langlöcher eines (hier zweiteilig ausgebildeten) konsolenfesten Halteteils eingreifen, wobei der hintere Führungsbolzen einen größeren Abstand als der vordere Führungsbolzen vom lenkradseitigen Ende der Lenkspindel aufweist. Die Verläufe der vorderen und hinteren Langlöcher unterscheiden sich voneinander. Die Führung für das Stellteil ist hierbei so ausgebildet, dass sich bei der Längenverstellung der Lenksäule Drehlagenveränderungen von zwei im Lenkstrang liegenden Kardangelenken derart kompensieren, dass unabhängig von der Einstellung der Lenksäule über die gesamte Umdrehung des Lenkrads die Gleichlaufwinkelgeschwindigkeit zwischen dem an das lenkradseitige Ende anschließenden Abschnitt der Lenkspindel und dem im Lenkgetriebe im Eingriff befindlichen Lenkritzel erhalten bleiben soll.

Aufgabe der Erfindung ist es eine einfach ausgebildete Lenksäule der eingangs genannten Art bereitzustellen, bei der erweiterte Möglichkeiten für die Vorgabe der möglichen Einstellpositionen der Lenksäule geschaffen sind. Erfindungsgemäß gelingt dies durch eine Lenksäule mit den Merkmalen des Anspruchs 1.

Bei der Lenksäule der Erfindung ist am Stellteil oder am Halteteil ein hinterer Führungsbolzen gehalten, der einen größeren Abstand als der vordere Führungsbolzen vom lenkradseitigen Ende der Lenkspindel aufweist und der in mindestens ein hinteres Langloch eingreift, das im Halteteil bzw. Stellteil vorgesehen ist. Der Verlauf des hinteren Langlochs unterscheidet sich zumindest über einen Abschnitt seiner Erstreckung vom entsprechenden Verlauf des mindestens einen vorderen Langlochs, wobei die Verläufe sich in der Krümmung und/oder in der Richtung ihrer Erstreckungen unterscheiden.

Durch die Führung der Führungsbolzen in den Langlöchern ergibt sich ein einziger (eindeutiger) Stellweg, wobei jede Position auf dem Stellweg einer eindeutigen Position des Stellteils bzw. des lenkradseitigen Endes der Lenkspindel entspricht. Die Verstellung erfolgt hierbei nicht nur entweder in Richtung der Längenverstellung oder in Richtung der Neigungs- bzw. Höhenverstellung sondern zumindest über einen Teil des Stellwegs gekoppelt (gleichzeitig) sowohl in Richtung der Längenverstellung als auch der Neigungs- bzw. Höhenverstellung.

Durch die erfindungsgemäße Ausbildung werden hierbei durch eine entsprechende Ausbildung der Verläufe der Langlöcher erweiterten Möglichkeiten für eine gewünschte Einstellcharakteristik über den Verstellweg geschaffen. Insbesondere kann sich über einen Teil des Verstellweges oder über den gesamten Verstellweg das lenkradseitige Ende der Lenkspindel gleichzeitig in die Richtung der Längenverstellung der Lenksäule und um eine virtuelle Drehachse bewegen, die einen größeren Abstand vom lenkradseitigen Ende der Lenkspindel als der hintere Führungsbolzen aufweist. Erfindungsgemäß ist die virtuelle Drehachse in den Bereich gelegt, in welchem sich das Kardangelenk befindet, welches den an das lenkradseitige Ende anschließenden Abschnitt der Lenkspindel mit einem weiteren Abschnitt der Lenkspindel verbindet. Dieses Kardangelenk bleibt somit bei der Verstellung der Lenksäule im Wesentlichen an der gleichen Position. Lagerungselemente für die Lenkspindel im Bereich des Kardangelenks sind hierbei nicht erforderlich.

Durch einen relativ großen Abstand der virtuellen Drehachse vom lenkradseitigen Ende kann auch eine geringe Änderung der Ebene des Lenkrades bei seiner Höhenverstellung erreicht werden.

Vorzugsweise unterscheidet sich der Verlauf des mindestens einen hinteren Langlochs vom Verlauf des mindestens einen vorderen Langlochs über zumindest ein Drittel des Verstellwegs, also zumindest über ein Drittel der über den Verstellweg von den Führungsbolzen durchlaufenden Abschnitte dieser Langlöcher.

Vorteilhafterweise ist zumindest ein Abschnitt des mindestens einen vorderen Langlochs, der sich vorzugsweise über mindestens ein Drittel der Ausdehnung des vorderen Langlochs erstreckt, über die der Führungsbolzen über den Stellweg verschoben wird, gebogen ausgebildet und/oder in eine Richtung erstreckt, die sowohl gegenüber der Richtung der Längsverstellung als auch gegenüber der Richtung der Höhen- bzw. Neigungsverstellung geneigt ist.

Vorteilhafterweise ist zumindest ein Abschnitt des mindestens einen hinteren Langlochs, der sich vorzugsweise über mindestens ein Drittel der Ausdehnung des hinteren Langlochs erstreckt, über die der Führungsbolzen über den Stellweg verschoben wird, gebogen ausgebildet und/oder in eine Richtung erstreckt, die sowohl gegenüber der Richtung der Längsverstellung als auch gegenüber der Richtung der Höhen- bzw. Neigungsverstellung geneigt ist.

Die eingestellte Position der Lenksäule kann mittels einer Feststelleinrichtung fixiert werden, wobei die Feststellung in herkömmlicher Weise durch reibschlüssig und/oder formschlüssig zusammenwirkende Elemente erfolgen kann. Vorzugsweise besitzt das Halteteil mindestens eine neben dem Stellteil sich erstreckende Seitenwange, die im geschlossenen Zustand der Feststelleinrichtung an eine Seitenwand des Stellteils angedrückt ist. Die Langlöcher können hierbei günstigerweise in einem der beiden aneinander angedrückten Teile angeordnet sein, besonders bevorzugt in der Seitenwange.

Neben einer Ausbildung, bei der das Halteteil nur einseitig des Stellteils eine das Stellteil tragende Seitenwange aufweist, ist auch eine Ausbildung denkbar und möglich, bei der das Halteteil beidseitig des Stellteils liegende Seitenwangen aufweist, die im geschlossenen Zustand der Feststelleinrichtung beidseitig an das Stellteil angedrückt sind. Im letzteren Fall könnten beispielsweise vom Stellteil gehaltene vordere und hintere Führungsbolzen vorgesehen sein, von denen aus dem Stellteil beidseitig vorstehende Abschnitte jeweils in einem Langloch der jeweiligen Seitenwange geführt sind. Anstelle von durchgehenden vorderen und hinteren Führungsbolzen könnten auch beidseitig am Stellteil und/oder an der jeweiligen Seitenwange jeweils ein vorderer und beidseitig am Stellteil und/oder beidseitig an der jeweiligen Seitenwange jeweils ein hinterer Führungsbolzen angebracht sein, der in das jeweilige Langloch der Seitenwange und/oder des Stellteils ragt. Auch eine Kombination dieser Ausbildungen, z.B. ein durchgehender vorderer Führungsbolzen und separate hintere Führungsbolzen oder umgekehrt ist denkbar und möglich.

In einer vorteilhaften Ausführungsform der Erfindung ist auf dem vorderen Führungsbolzen mindestens ein Feststellelement der Feststelleinrichtung angeordnet. Dieses wirkt im geschlossenen Zustand der Feststelleinrichtung mit einem Gegenfeststellelement zusammen, welches sowohl in Richtung der Längsverstellung als auch in Richtung der Höhen- bzw. Neigungsverstellung unverschiebbar gegenüber dem Halteteil ist, vorzugsweise ein Teil des Halteteils darstellt. Vorzugsweise wird das Feststellelement beim Öffnen und Schließen der Feststelleinrichtung in Richtung der Längsachse des vorderen Führungsbolzens verstellt, um außer Eingriff und in Eingriff mit dem Gegenfeststellteil zu gelangen. Beispielsweise kann zu diesem Zweck eine Nockenscheibe vorgesehen sein, die mit einer Kulissenscheibe zusammenwirkt, wobei eine der Scheiben beim Öffnen und Schließen der Feststelleinrichtung verdreht wird.

Eine vorteilhafte Ausbildung sieht vor, dass anschließend an dasjenige Ende des Stellweges, an dem die Lenkspindel ihre geringste Länge aufweist, ein Crashweg anschließt, über den der vordere und der hintere Führungsbolzen in Crashabschnitten der vorderen und hinteren Langlöcher verschiebbar sind. Diese Crashabschnitte der Langlöcher schließen also an Stellabschnitte der Langlöcher an, über welche die Führungsbolzen über den Stellweg verschiebbar sind.

Günstigerweise wirkt hierbei zumindest über einen Teil des Crashweges ein Energieabsorptionsmechanismus, durch welchen Energie dissipiert wird, abgesehen von der Energie, die durch Überwindung der Haltekräfte der Feststelleinrichtung dissipiert wird. Dieser Energieabsorptionsmechanismus kann beispielsweise derart ausgebildet sein, dass die Verschiebung des vorderen Führungsbolzens über den Crashabschnitt des mindestens einen vorderen Langlochs und/oder die Verschiebung des hinteren Führungsbolzens über den Crashabschnitt des mindestens einen hinteren Langlochs unter Energieaufzehrung erfolgt, z.B. durch eine Aufweitung des Langlochs durch den Führungsbolzen. Auch andere Energieabsorptionsmechanismen sind denkbar und möglich, beispielsweise indem am Ende des Stellweges das Stellteil oder ein hiermit verbundenes Teil mit einem am Halteteil oder einem hiermit verbundenen Teil gehaltenen Energieabsorptionselement in Eingriff gelangt, beispielsweise einem Biegestreifen oder einem Aufreißstreifen.

Vorzugsweise liegt zwischen dem Stellabschnitt und dem Crashabschnitt des mindestens einen vorderen und/oder des mindestens einen hinteren Langlochs ein Anschlagelement, welches im Normalbetrieb den Stellweg begrenzt und welches im Crashfall verformbar ist, um den Crashweg freizugeben.

Ein Crashfall liegt vor, wenn auf das lenkradseitige Ende der Lenkspindel in axialer Richtung der Lenkspindel eine Kraft einwirkt, die einen vorgegebenen Grenzwert überschreitet. Dieser Grenzwert liegt vorzugsweise bei mindestens 500 N. Es ist bevorzugt, dass dieser Grenzwert bei maximal 10000 N, besonders bevorzugt bei maximal 5000 N liegt.

Wenn im Rahmen dieser Schrift im Zusammenhang mit der Lenksäule von "vorne" und "hinten" die Rede ist, so ist dies auf die Sicht des Fahrers bezogen, ein weiter vorne liegendes Teil weist also einen geringeren Abstand vom in der vorgesehenen Fahrposition sich befindenden Kopf des Fahrers auf als ein weiter hinten liegendes.

Weitere Vorteile und Einzelheiten der Erfindung werden im Folgenden anhand der beiliegenden Zeichnung erläutert. In dieser zeigen:
Fig. 1 eine Schrägsicht eines Ausführungsbeispiels einer erfindungsgemäßen Lenksäule am Ende des Stellweges, in der die Lenkspindel ihre größte Länge aufweist (=lang ausgezogene Stellung);
Fig. 2 eine Schrägsicht aus einem geänderten Blickwinkel in einer Zwischenstellung der Lenksäule, Teile der Lenksäule auseinandergezogen dargestellt (und der Betätigungshebel weggelassen);
Fig. 3 eine Seitenansicht der Lenksäule in der lang ausgezogenen Stellung;
Fig. 4 eine Seitenansicht der Lenksäule, wobei sich das Stellteil am Ende des Stettweges befindet, in der die Lenkspindel ihre kürzeste Länge aufweist (=maximal eingefahrene Stellung);
Fig. 5 und 6 eine Seitenansicht und eine Schrägsicht der Lenksäule nach einem Fahrzeugcrash;
Fig. 7 eine Schrägsicht der Lenksäule von der gegenüberliegenden Seite;
Fig. 8 eine Schrägsicht entsprechend Fig. 7 einer modifizierten Ausführungsform des Stellteils;
Fig. 9 einen vergrößerten Ausschnitt A von Fig. 3 mit einer modifizierten Ausbildung des Anschlags am Ende des Stellwegs, an den der Crashweg anschließt;
Fig. 10 die Ausbildung von Fig. 9 nach einem Fahrzeugcrash.

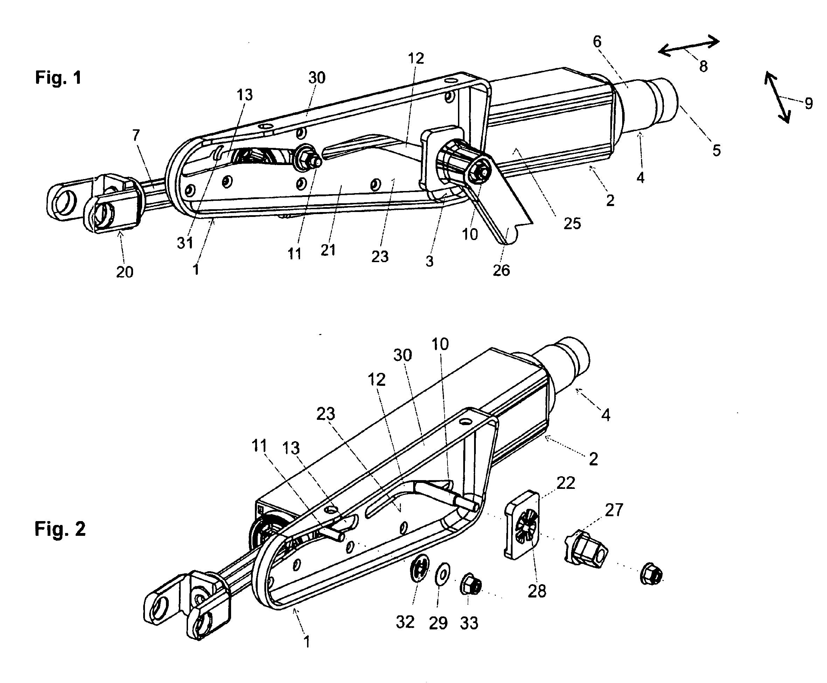

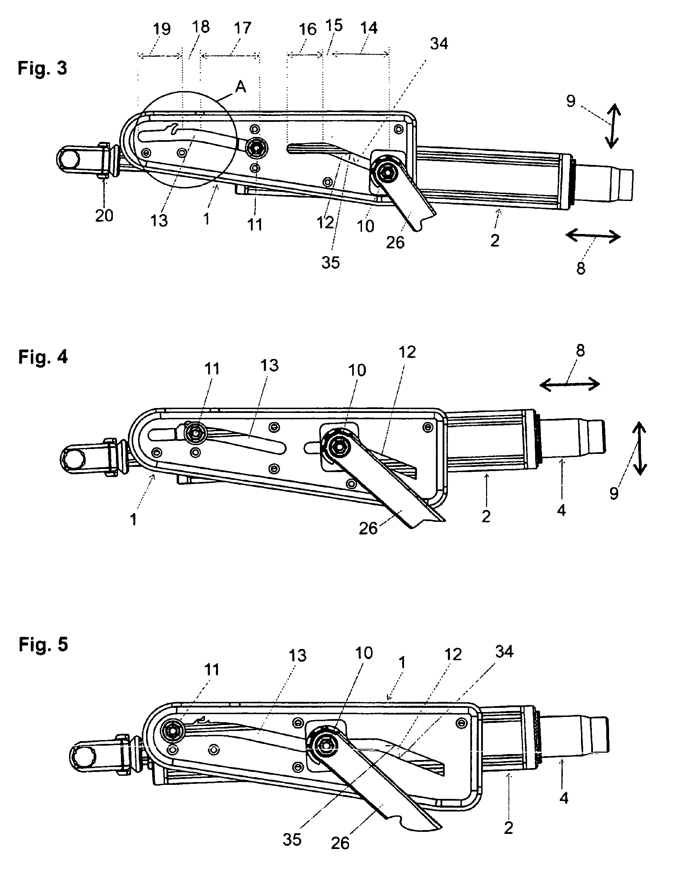

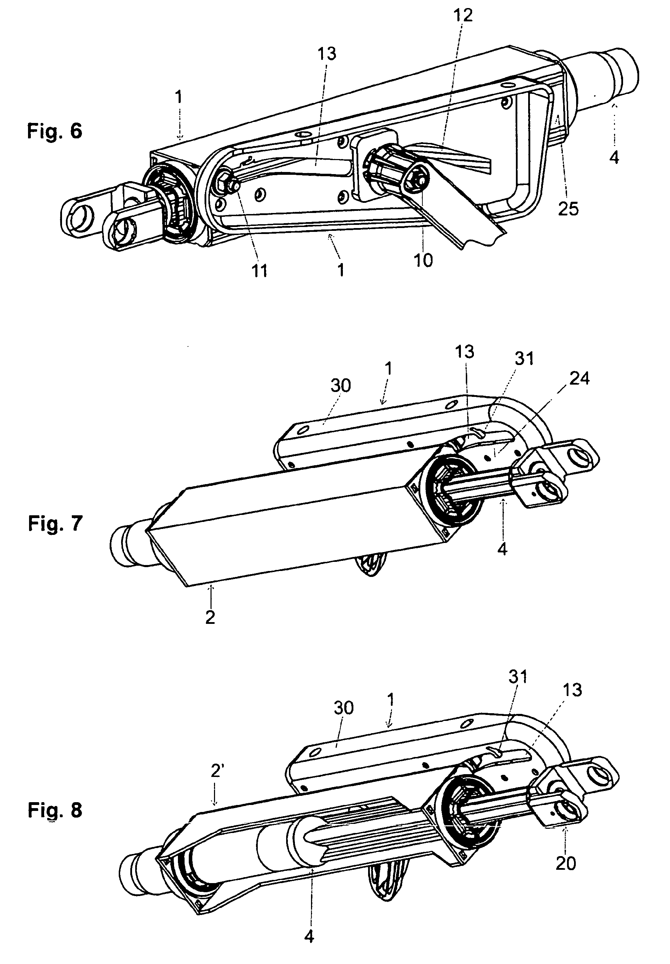

Ein Ausführungsbeispiel der Erfindung ist in den Fig. 1 bis 7 dargestellt. Die Lenksäule umfasst ein an einer Karosserie des Kraftfahrzeuges zu befestigendes Halteteil 1 und ein im geöffneten Zustand einer Feststelleinrichtung gegenüber diesem verstellbares Stellteil 2. Das Stellteil 2 (das hier auch als Manteleinheit oder Lagereinheit bezeichnet werden kann) lagert einen Abschnitt der Lenkspindel 4 drehbar, welcher an ein lenkradseitiges Ende 5 der Lenkspindel 4 anschließt. Der vom Stellteil 2 drehbar gelagerte Abschnitt der Lenkspindel 4 umfasst zwei parallel zueinander gegeneinander teleskopierbare Teilabschnitte 6, 7 (der Verbindungsbereich dieser ist nur in der Ausführungsvariante von Fig. 8 sichtbar), um die Längeneinstellung der Lenksäule zu ermöglichen.

Im geöffneten Zustand der Feststelleinrichtung 3 ist das Stellteil 2 bzw. das lenkradseitige Ende 5 der Lenkspindel 4 über einen Stellweg verstellbar. Hierbei erfolgt eine kombinierte Verstellung der Lenkspindel 4 bzw. des lenkradseitigen Endes 5 der Lenkspindel 4 in die Richtung 8 der Längenverstellung und die Richtung 9 der Höhen- bzw. Neigungsverstellung. Die Richtung 8 der Längenverstellung liegt in jeder Verstellposition des Stellteils 2 parallel zur Längsachse des an das lenkradseitige Ende 5 anschließenden Abschnitts der Lenkspindel 4 und die Richtung 9 der Höhen- bzw. Neigungsverstellung liegt in einer jeweiligen Stellposition des Stellteils 2 rechtwinkelig zur Längsachse des an das lenkradseitige Ende 5 anschließenden Abschnitts der Lenkspindel 4.

Bei Personenkraftwagen stellt die Richtung 9 üblicherweise eine Höhenverstellung des Lenkrads dar. Bei Kraftfahrzeugen mit im Wesentlichen vertikal ausgerichteter Lenksäule würde die Richtung 9 eine Verstellung der Lenksäule in Richtung zur Fahrzeugfront oder zum Fahrzeugheck darstellen, wobei die Längenverstellung hier die Höhe des Lenkrads verstellt.

Am Stellteil 2 sind ein vorderer Führungsbolzen 10 und ein hinterer Führungsbolzen 11 sowohl bezogen auf die Richtung 8 der Längenverstellung also auch bezogen auf die Richtung 9 der Höhen- bzw. Neigungsverstellung unverstellbar gehalten. Im gezeigten Ausführungsbeispiel sind die Führungsbolzen 10, 11 starr mit dem Stellteil 2 verbunden. Eine Verschiebbarkeit in Richtung ihrer Längsachsen ist denkbar und möglich. Der vordere Führungsbolzen 10 ragt in ein im Halteteil 1 ausgebildetes vorderes Langloch 12 und der hintere Führungsbolzen ragt in ein im Halteteil 1 ausgebildetes hinteres Langloch 13.

Die umgekehrte Anordnung, bei der die Langlöcher 12, 13 im Stellteil 2 ausgebildet sind und die Führungsbolzen 10, 11 am Halteteil 1 gehalten sind, ist denkbar und möglich.

Durch die Führung der Führungsbolzen 10, 11 in den Langlöchern 12, 13 ist das Stellteil 2 bzw. das lenkradseitige Ende 5 der Lenkspindel 4 über den Stellweg geführt, und zwar zwischen einer ersten Endposition, in der die Lenkspindel 4 ihre größte Länge aufweist, und einer zweiten Endposition, in der die Lenkspindel 4 ihre kürzeste Länge aufweist. Es existiert hierbei nur ein einziger Stellweg, d.h. der Stellweg ist eindeutig, und jeder Punkt auf dem Stellweg entspricht einer eindeutigen Stellung des am lenkradseitigen Ende 5 der Lenkspindel 4 angebrachten Lenkrads (nicht dargestellt in den Figuren).

Im Ausführungsbeispiel befindet sich das lenkradseitige Ende 5 der Lenkspindel 4 in der lang ausgezogenen Stellung in seiner tiefsten Position. Beim Einschieben in Richtung zur maximal eingefahrenen Stellung verschiebt sich das lenkradseitige Ende 5 zusätzlich nach oben. Der Grundgedanke ist hier, dass eine große Person den Sitz weit hinten sowie in einer tiefen Verstellposition einstellt, während eine kleinere Person den Sitz weit vorne und höher einstellt.

Das vordere Langloch 12 besitzt im Ausführungsbeispiel anschließend an die erste Endposition des Stellweges einen zumindest annähernd geraden Abschnitt 14 (eine allfällige Krümmung dieses Abschnitts 14 beträgt weniger als 5°), an den ein gebogener Abschnitt 15 anschließt. Mit diesem gebogenen Abschnitt 15 endet der den Stellweg ermöglichen de Stellabschnitt des vorderen Langlochs 12 (ein daran anschließender Crashabschnitt 16 wird weiter unten beschrieben). Das hintere Langloch 13 besitzt anschließend an die erste Endposition des Stellwegs einen zumindest annähernd geraden Abschnitt 17 (eine allfällige Krümmung dieses Abschnitts 17 beträgt weniger als 5°), an den ein gebogener Abschnitt 18 anschließt. Mit diesem gebogenen Abschnitt 18 endet der den Stellweg ermöglichende Stellabschnitt des hinteren Langlochs 13 (ein daran anschließender Crashabschnitt 19 wird weiter unten beschrieben). Wenn sich der vordere Führungsbolzen 10 im geraden Abschnitt 14 des vorderen Langlochs 12 befindet, befindet sich der hintere Führungsbolzen 11 im geraden Abschnitt 17 des hinteren Langlochs 13. Wenn sich der vordere Führungsbolzen 10 im gebogenen Abschnitt 15 des vorderen Langlochs 12 befindet, so befindet sich der hintere Führungsbolzen 11 im gebogenen Abschnitt 18 des hinteren Langlochs 13.

Der gerade Abschnitt 14 des jeweiligen vorderen Langlochs 12 steht für alle Positionen des Stellteils 2 entlang des Stellwegs winkelig zur Richtung 8 der Längsverstellung sowie zur Richtung 9 der Höhen- bzw. Neigungsverstellung. Vorzugsweise beträgt sowohl der Winkel zur Richtung 8 der Längenverstellung als auch der Winkel zur Richtung 9 der Höhen- bzw. Neigungsverstellung für alle Positionen des Stellteils 2 entlang des Stellwegs mindestens 10°.

Der gerade Abschnitt 14 des jeweiligen hinteren Langlochs 13 steht für alle Positionen des Stellteils 2 entlang des Stellwegs winkelig zur Richtung 8 der Längsverstellung sowie zur Richtung 9 der Höhen- bzw. Neigungsverstellung. Vorzugsweise beträgt sowohl der Winkel zur Richtung 8 der Längenverstellung als auch der Winkel zur Richtung 9 der Höhen- bzw. Neigungsverstellung für alle Positionen des Stellteils 2 entlang des Stellwegs mindestens 10°.

Der Verlauf des hinteren Langlochs 13 unterscheidet sich über die Abschnitte 17, 18 vom entsprechenden Verlauf des vorderen Langlochs 12 über die Abschnitte 14, 15. Beim Vergleich der Verläufe der Langlöcher 12, 13 geht es um den Vergleich der jeweils gleichzeitig einerseits vom vorderen Führungsbolzen 10, andererseits vom hinteren Führungsbolzen 13 durchlaufenen Punkte. Im Ausführungsbeispiel unterscheidet sich hierbei die Richtung der Erstreckung des geraden Abschnitts 17 des hinteren Langlochs 13 von der Richtung der Erstreckung des geraden Abschnitts 14 des vorderen Langlochs 12. Mit anderen Worten stehen die Abschnitte 17, 14 winkelig zueinander. Über den gebogenen Abschnitt 18 kann das hintere Langloch 13 zudem einen gegenüber dem gebogenen Abschnitt 15 des vorderen Langlochs 12 unterschiedlichen Krümmungsradius und - zumindest teilweise - eine unterschiedliche Richtung der Erstreckung aufweisen, d.h. die Tangenten der einander entsprechenden Teilabschnitte (=dort wo die Führungsbolzen 10, 11 gfeichzeitig zu liegen kommen) stehen winkelig zueinander.

Die Längsachsen des vorderen und des hinteren Führungsbolzens 10, 11 liegen parallel zueinander. Der hintere Führungsbolzen 10 und das hintere Langloch 13 weisen einen größeren Abstand vom lenkradseitigen Ende 5 der Lenkspindel 4 auf als der vordere Führungsbolzen 10 und das vordere Langloch 12.

Die Längsachsen der Führungsbolzen 10, 11 liegen rechtwinkelig zur Längsachse des an das lenkradseitige Ende anschließenden Abschnitts der Lenkspindel 4 und rechtwinkelig zur Richtung 9 der Höhen- bzw. Neigungsverstellung.

Vorzugsweise liegen die Längsachsen der Führungsbolzen 10, 11 horizontal.

Bei der Verstellung des Stellteils 2 und des mit ihm verstellten lenkradseitigen Endes 5 der Lenkspindel 4 über den Stellweg erfolgt zumindest über einen Großteil des Stellweges (zumindest über die geraden Abschnitte 14, 17) gekoppelt (also gleichzeitig) eine Verstellung des Stellteils 2 und des lenkradseitigen Endes 5 in Richtung 8 der Längenverstellung und in Richtung 9 der Höhen- bzw. Neigungsverstellung. Die Verstellung in Richtung 9 der Höhen- bzw. Neigungsverstellung entspricht einer Drehung des Stellteils 2 und des lenkradseitigen Endes 5 um eine parallel zu den Achsen der Führungsbolzen 10, 11 liegende virtuelle Drehachse, die sich beim Kardangelenk 20 befindet, welches den an das lenkradseitige Ende 5 anschließenden Abschnitt der Lenkspindel 4 (der die teleskopierbaren Teilabschnitte 6, 7 umfasst) mit einem weiteren Abschnitt der Lenkspindel verbindet.

Das Halteteil 1 weist eine neben dem Stellteil 2 sich erstreckende Seitenwange 21 auf, die rechtwinkelig zu den Längsachsen der Führungsbolzen 10, 11 liegt und in der das vordere und hintere Langloch 12, 13 angeordnet sind. Im gezeigten Ausführungsbeispiel ist nur einseitig des Stellteils 2 eine solche Seitenwange 21 vorhanden. Denkbar und möglich wäre es auch, dass das Halteteil 1 zwei parallele Seitenwangen aufweist, die beidseitig des Stellteils 2 liegen und jeweils vordere und hintere Führungsbolzen 10, 11 führende vordere und hintere Langlöcher 12, 13 aufweisen. Bevorzugt wäre hierbei eine in Längsrichtung der Führungsbolzen 10, 11 gesehen deckungsgleiche Lage sowohl der beiden vorderen Langlöcher als auch der beiden hinteren Langlöcher.

Im geschlossenen Zustand der Feststelleinrichtung 3 ist die Seitenwange 21 an das Stellteil 2 angepresst. Im Falle einer Ausbildung mit beidseitig des Stellteils 2 angeordneten Seitenwangen wären diese im geschlossenen Zustand vorzugsweise beidseitig an das Stellteil 2 angepresst.

Die Feststelleinrichtung 3 besitzt ein auf dem vorderen Führungsbolzen 10 in Richtung von dessen Längsachse verschiebbar angeordnetes Feststellelement 22. Im geschlossenen Zustand der Feststelleinrichtung 3 wirkt dieses mit einem Gegenfeststellelement des Halteteils 1 zusammen, um einer Verstellung des Stellteils 2 gegenüber dem Halteteil 1 entgegenzuwirken. Dieses Gegenfeststellelement wird im gezeigten Ausführungsbeispiel von einem dem vorderen Langloch 12 benachbarten Bereich der äußeren Oberfläche 23 der Seitenwange 21 gebildet. Das Feststellelement 22 und das Gegenfeststellelement wirken hierbei reibschlüssig zusammen. Ein weiterer Reibschluss wird zwischen der inneren Oberfläche 24 der Seitenwange 21 und der Seitenfläche 25 des Stellteils 2 gebildet, an die sie im geschlossenen Zustand der Feststelleinrichtung 3 angedrückt ist.

Anstelle von reibschlüssig zusammenwirkenden Elementen zur Feststellung des Stellteils 2 gegenüber dem Halteteil 1 im geschlossenen Zustand der Feststelleinrichtung 3 könnten auch formschlüssig zusammenwirkende Elemente vorgesehen sein. Auch Kombinationen von reibschlüssig und formschlüssig zusammenwirkenden Elementen könnten vorgesehen sein. Zur Erhöhung der Anzahl der Reibflächen könnten nach Art einer Lamellenkupplung zusammenwirkende Lamellen vorgesehen sein, die zwischen dem Feststellelement 22 und der Seitenwange 21 angeordnet sind und von denen jede zweite mit dem Halteteil 1 und die dazwischenliegenden mit dem Stellteil 2 verbunden sind. Solche zusammenwirkenden Lamellenpakete sind bekannt. Das Halteteil 1 und Stellteil 2 müssten zu diesem Zweck entsprechend modifiziert ausgebildet werden.

Zum Öffnen und Schließen der Feststelleinrichtung 3 dient im gezeigten Ausführungsbeispiel ein Betätigungshebel 26, der auf dem vorderen Führungsbolzen 10 drehbar angeordnet ist. Bei der Verdrehung des Betätigungshebels 26 um die Achse des vorderen Führungsbolzens 10 wird vom Betätigungshebel 26 eine Nockenscheibe 27 mitgenommen also verdreht, die mit Kulissenflächen 28 zusammenwirken, die Steigungen aufweisen, um bei der Verdrehung der Nockenscheibe 27 das Feststellelement 22 in axialer Richtung des vorderen Führungsbolzens 10 zu bewegen. Die Kulissenflächen 28 sind im gezeigten Ausführungsbeispiel am Feststellelement 27 angeordnet, welches somit eine Kulissenscheibe bildet. Auch eine separate Kulissenscheibe könnte vorgesehen sein.

Andere Ausbildungen von Feststelleinrichtungen 3 sind denkbar und möglich. Grundsätzlich denkbar und möglich wäre es auch, die Feststelleinrichtung 3 im Bereich des hinteren Führungsbolzens 11 anzuordnen, wobei das Feststellelement 22 auf dem hinteren Führungsbolzen 11 in Richtung der Längsachse desselben verschiebbar angeordnet sein könnte und beim Öffnen und Schließen der Feststelleinrichtung in axialer Richtung des hinteren Führungsbolzens verschoben werden könnte.

Im gezeigten Ausführungsbeispiel ist zur Bewirkung einer Spielfreiheit im Bereich des hintere Führungsbolzens zwischen einer Mutter, die auf das das hintere Langloch 13 durchsetzende, mit einem Außengewinde versehene Ende des hinteren Führungsbolzens 11 aufgeschraubt ist und der Seitenwange 21 eine Federscheibe 29 eingelegt.

Zur Befestigung des Halteteils 1 am Chassis des Kraftfahrzeugs dient ein Verbindungssteg 30, der winkelig, insbesondere rechtwinkelig zur Seitenwange 21 steht. Im gezeigten Ausführungsbeispiel ist zur Erhöhung der Stabilität des Halteteils 1 ein um den Umfang der Seitenwange 21 umlaufender, umgebogener Steg vorhanden, dessen entlang der Oberseite der Seitenwange 21 verlaufender Abschnitt den Verbindungssteg 30 bildet.

Anschließend an dasjenige Ende des Stellwegs des Stellteils 2 bzw. lenkradseitigen Endes 5, an dem die Lenkspindel 4 ihre geringste Länge aufweist, schließt ein Crashweg des Stellteils 2 bzw. lenkradseitigen Endes 5 der Lenkspindel 4 an. Über diesen ist das Stellteil 2 bzw. das lenkradseitige Ende 5 im Falle eines Fahrzeugcrashes verschiebbar, wobei die Haltekraft der Feststelleinrichtung überwunden wird. Hierbei verschieben sich die Führungsbolzen 10, 11 über die Crashabschnitte 16, 19 der Langlöcher 12, 13. Vorzugsweise erfolgt über den Crashweg eine Verschiebung des Stellteils 2 bzw. lenkradseitigen Endes 5 in Richtung 8 der Längenverstellung. Die Crashabschnitte 16, 19 verlaufen somit parallel zur Längsachse des an das lenkradseitige Ende 5 anschließenden Abschnitts der Lenkspindel 4 (bezogen auf die Stellung des Stellteils 2 bzw. dieses Abschnitts der Lenkspindel 4, den das Stellteil 2 bzw. der Abschnitt der Lenkspindel 4 über den Crashweg einnimmt). In modifizierten Ausführungsformen könnten auch Abweichungen der Längserstreckungen der Crashabschnitte 16, 19 gegenüber der parallelen Lage zur Längsachse des an das lenkradseitige Ende 5 anschließenden Abschnitts der Lenkspindel 4 vorgesehen sein, wobei diese Abweichungen vorzugsweise kleiner als 20° sind.

Damit die Führungsbolzen 10, 11 in die Crashabschnitte 16, 19 gelangen, muss ein den Stellweg begrenzender Anschlag 31 freigegeben bzw. überwunden werden, vorzugsweise durch Verformung. Im Ausführungsbeispiel gemäß den Fig. 1 bis 6 wird hierbei ein in das hintere Langloch 13 ragender, den Anschlag 31 bildender Lappen von hinteren Führungsbolzen 11 umgebogen.

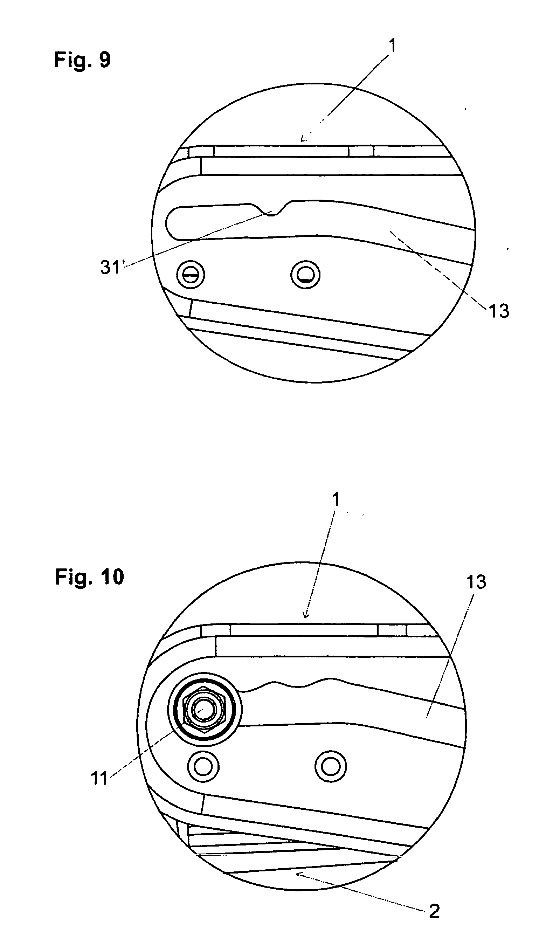

Die Fig. 9 und 10 zeigen eine alternative Ausführungsform, bei der der Anschlag 31' von einem verengten Abschnitt des hinteren Langlochs 13 gebildet wird, der im Crashfall vom hinteren Führungsbolzen 11 aufgeweitet wird.

Solche Anschläge 31, 31' könnten stattdessen oder zusätzlich für das mindestens eine vordere Langloch 12 vorgesehen sein. In anderen Ausführungsformen wäre es auch denkbar und möglich stattdessen oder zusätzlich einen oder mehrere, insbesondere verformbare, Anschläge zwischen dem Halteteil 1 und Stellteil 2 vorzusehen.

Günstigerweise ist vorgesehen, dass über den Crashweg oder einen Teil hiervon zusätzlich zur durch die Überwindung der Haltekraft der Feststelleinrichtung 3 dissipierten Energie mittels eines separaten Energieabsorptionsmechanismus Energie dissipiert wird. Beispielsweise kann vorgesehen sein, dass das mindestens eine hintere Langloch 13 und/oder das mindestens eine vordere Langloch 12 im Crashabschnitt 19, 16 einen geringeren Durchmesser als der hintere bzw. vordere Führungsbolzen 11, 10 aufweist und bei der Verschiebung des Führungsbolzens 11, 10 über den Crashabschnitt 19, 16 aufgeweitet wird.

Fig. 8 zeigt eine modifizierte Ausbildung des Stellteils 2'. Dieses ist hier nicht als geschlossene Manteleinheit sondern als offene Lagereinheit für die beiden endseitig angeordneten Lager zur drehbaren Lagerung des an das lenkradseitige Ende 5 anschließenden Abschnitts der Lenkspindel 4 ausgebildet.

### Legende

### zu den Hinweisziffern:

- 1: Halteteil
- 2, 2': Stellteil
- 3: Feststelleinrichtung
- 4: Lenkspindel
- 5: lenkradseitiges Ende
- 6: Teilabschnitt
- 7: Teilabschnitt
- 8: Richtung der Längenverstellung
- 9: Richtung der Höhen- bzw. Neigungsverstellung
- 10: vorderer Führungsbolzen
- 11: hinterer Führungsbolzen
- 12: vorderes Langloch
- 13: hinteres Langloch
- 14: gerader Abschnitt
- 15: gebogener Abschnitt
- 16: Crashabschnitt
- 17: gerader Abschnitt
- 18: gebogener Abschnitt
- 19: Crashabschnitt
- 20: Kardangelenk
- 21: Seitenwange
- 22: Feststellelement
- 23: äußere Oberfläche
- 24: innere Oberfläche
- 25: Seitenfläche
- 26: Betätigungshebel
- 27: Nockenscheibe
- 28: Kulissenfläche
- 29: Federscheibe
- 30: Verbindungssteg
- 31, 31': Anschlag

## Patentansprüche

1. Verstellbare Lenksäule für ein Kraftfahrzeug mit einem Halteteil (1), das an der Karosserie des Kraftfahrzeugs befestigbar ist, und einem gegenüber dem Halteteil (1) verstellbaren Stellteil (2), das einen Abschnitt der Lenkspindel (4) drehbar lagert, der an ein lenkradseitiges Ende (5) der Lenkspindel (4) anschließt, welches bei der Verstellung des Stellteüs (2) gegenüber dem Halteteil (1) zwischen einer ersten Endposition und einer zweiten Endposition über einen Stellweg verstellbar ist, wobei über zumindest einen Teil des Stellweges gekoppelt eine Verstellung des lenkradseitigen Endes (5) in eine Richtung (8) einer Längenverstellung der Lenksäule und in eine in einer jeweiligen Stellposition des Stellteils (2) rechtwinkelig zur Längsachse des an das lenkradseitige Ende (5) anschließenden Abschnitts der Lenkspindel (4) liegende Richtung (9) einer Höhen- bzw. Neigungsverstellung der Lenksäule erfolgt und am Stellteil (2) oder am Halteteil (1) ein vorderer Führungsbolzen (10) gehalten ist, der in mindestens ein im anderen dieser beiden Teile (1, 2) vorgesehenes vorderes Langloch (12) eingreift, **dadurch gekennzeichnet, dass** weiters am Stellteil (2) oder am Halteteil (1) ein hinterer Führungsbolzen (11) gehalten ist, der einen größeren Abstand als der vordere Führungsbolzen (10) vom lenkradseitigen Ende (5) der Lenkspindel (4) aufweist und der in mindestens ein im anderen dieser beiden Teile (1, 2) vorgesehenes hinteres Langloch (13) eingreift, dessen Verlauf sich bezogen auf seine Krümmung und/oder die Richtung seiner Erstreckung zumindest über einen Abschnitt seiner Erstreckung vom entsprechenden Verlauf des mindestens einen vorderen Langlochs (12) unterscheidet, und dass sich das lenkradseitige Ende (5) der Lenkspindel (4) zumindest über einen Teil des Verstellweges gleichzeitig in die Richtung (8) der Längenverstellung bewegt und um eine virtuelle Drehachse gedreht wird, die im Bereich eines Kardangelenks (20) liegt, welches den an das lenkradseitige Ende (5) anschließenden Abschnitt der Lenkspindel (4) mit einem weiteren Abschnitt der Lenkspindel (4) verbindet.

2. Verstellbare Lenksäule nach Anspruch 1, **dadurch gekennzeichnet, dass** sich das lenkradseitige Ende (5) der Lenkspindel (4) in der maximal ausgezogenen Stellung der Lenkspindel (4) in seiner tiefsten Position befindet und sich beim Einschieben der Lenkspindel (4) in Richtung der maximal eingefahrenen Stellung der Lenkspindel (4) zusätzlich zur Verschiebung in die Richtung (8) der Längenverstellung nach oben verschiebt.

3. Verstellbare Lenksäule nach Anspruch 1 oder 2, **dadurch gekennzeichnet, dass** zumindest ein Abschnitt (15) des mindestens einen vorderen Langlochs (12) gebogen ausgebildet ist und/oder sich zumindest ein Abschnitt (14) des mindestens einen vorderen Langlochs (12) in eine Richtung erstreckt, die sowohl gegenüber der Richtung (8) der Längenverstellung als auch gegenüber der Richtung (9) der Höhen- bzw. Neigungsverstellung geneigt ist, und dass zumindest ein Abschnitt (18) des mindestens einen hinteren Langlochs (13) gebogen ausgebildet ist und/oder sich zumindest ein Abschnitt (17) des hinteren Langlochs (13) in eine Richtung erstreckt, die sowohl gegenüber der Richtung (8) der Längenverstellung als auch gegenüber der Richtung (9) der Höhen- bzw. Neigungsverstellung geneigt ist.

4. Verstellbare Lenksäule nach einem der Ansprüche 1 bis 3, **dadurch gekennzeichnet, dass** auf dem vorderen Führungsbolzen (10) mindestens ein Feststellelement (22) einer Feststelleinrichtung (3) angeordnet ist, in deren geöffnetem Zustand das Stellteil (2) gegenüber dem Halteteil (1) über den Stellweg verstellbar ist und von der in ihrem geschlossenen Zustand das Stellteil (2) unverstellbar gegenüber dem Halteteil (1) gehalten ist.

5. Verstellbare Lenksäule nach Anspruch 4, **dadurch gekennzeichnet, dass** das Feststellelement (22) beim Öffnen und Schließen der Feststelleinrichtung (3) in Richtung der Längsachse des vorderen Führungsbolzens (10) verstellt wird.

6. Verstellbare Lenksäule nach einem der Ansprüche 1 bis 5, **dadurch gekennzeichnet, dass** sich das lenkradseitige Ende (5) der Lenkspindel (4) über den gesamten Verstellweg gleichzeitig in die Richtung (8) der Längenverstellung bewegt und um eine virtuelle Drehachse gedreht wird.

7. Verstellbare Lenksäule nach Anspruch 6, **dadurch gekennzeichnet, dass** die virtuelle Drehachse einen größeren Abstand vom lenkradseitigen Ende (5) der Lenkspindel (4) als der hintere Führungsbolzen (11) aufweist.

8. Verstellbare Lenksäule nach einem der Ansprüche 1 bis 7, **dadurch gekennzeichnet, dass** anschließend an dasjenige Ende des Stellweges, an dem die Lenkspindel (4) ihre geringste Länge aufweist, ein Crashweg anschließt, über den im Falle eines Fahrzeugcrashs das lenkradseitigen Ende (5) der Lenkspindel (4) verschiebbar ist, wobei der vordere und der hintere Führungsbolzen (10, 11) in Crashabschnitten (16,19) der vorderen und hinteren Langlöcher (12, 13) verschiebbar sind.

9. Verstellbare Lenksäule nach Anspruch 8, **dadurch gekennzeichnet, dass** die Crashabschnitte (16, 19) in die Richtung (8) der Längenverstellung verlaufen.

10. Verstellbare Lenksäule nach Anspruch 8 oder 9, **dadurch gekennzeichnet, dass** mindestens ein Anschlag (31, 31) dasjenige Ende des Stellweges, in welchem die Lenkspindel (4) ihre kürzeste Länge hat, begrenzt und im Crashfall verformt und dadurch überwunden wird.

11. Verstellbare Lenksäule nach Anspruch 10, **dadurch gekennzeichnet, dass** mindestens eines der Langlöcher (12, 13) den Anschlag (31, 31') aufweist, der den Durchmesser des Langlochs (12, 13) verringert und der im Crashfall vom in diesem Langloch (12, 13) geführten Führungsbolzen (10, 11) verformt wird.

12. Verstellbare Lenksäule nach einem der Ansprüche 8 bis 11, **dadurch gekennzeichnet, dass** zumindest über einen Teil des Crashweges ein Energieabsorbtionsmechanismus wirkt, der zusätzlich zur Energie, die durch die Überwindung der Feststelleinrichtung (3) aufgezehrt wird, Energie aufzehrt.

13. Verstellbare Lenksäule nach Anspruch 12, **dadurch gekennzeichnet, dass** der Energieabsorbtionsmechanismus zwischen mindestens einem der Langlöcher (12, 13) und dem in diesem Langloch geführten Führungsbolzen (10, 11) wirkt.

14. Verstellbaren Lenksäule nach einem der Ansprüche 1 bis 13, **dadurch gekennzeichnet, dass** sich nur auf einer Seite des Stellteils (2) eine Seitenwange (21) des Halteteils (1) erstreckt, die das Stellteil (2) trägt.

## Claims

1. An adjustable steering column for a motor vehicle, having a holding part (1) which is securable to the body of the motor vehicle and an adjusting part (2), adjustable with respect to the holding part (1), which rotatably supports a portion, adjacent to a steering-spindle end (5) located at the steering-wheel side, of the steering spindle (4), which end (5) is upon adjustment of the adjusting part (2) with respect to the holding part (1) adjustable between a first end position and a second end position over a adjustment path, wherein coupled over at least part of the adjustment path there takes place an adjustment of the end (5), at the steering-wheel side, in a direction (8) of a longitudinal adjustment of the steering column and in a direction (9) of a height or inclination adjustment of the steering column, this direction (9) lying at right angles to the longitudinal axis of the portion, adjoining the end (5) located at the steering-wheel side, of the steering spindle (4) in a respective adjustment position of the adjusting part (2), and a front guide bolt (10) is held on the adjusting part (2) or on the holding part (1), which guide bolt (10) engages at least one front oblong hole (12) provided in the other of these two parts (1, 2), **characterised in that** furthermore a rear guide bolt (11) is held on the adjusting part (2) or on the holding part (1), which guide bolt (11) is at a greater distance from the end (5), at the steering-wheel side, of the steering spindle (4) than the front guide bolt (10) and engages at least one rear oblong hole (13) provided in the other of these two parts (1, 2), the course of which oblong hole (13) related to its curvature and/or the direction of its extension differs over at least a portion of its extension from the corresponding course of the at least one front oblong hole (12), and **in that** over at least part of the adjustment path, the end (5), at the steering-wheel side, of the steering spindle (4) simultaneously moves in the direction (8) of the longitudinal displacement and is rotated about a virtual rotational axis lying in the region of a cardan joint (20) connecting the portion, adjoining the end (5), at the steering-wheel side, of the steering spindle (4) to another portion of the steering spindle (4).

2. An adjustable steering column according to claim 1, **characterised in that** the end (5), at the steering-wheel side, of the steering spindle (4) is located in its lowest position in the maximum extension position of the steering spindle (4) and upon pushing-in of the steering spindle (4) in the direction of the maximum retraction position of the steering spindle (4) moves upwards in addition to the displacement in the direction (8) of the longitudinal adjustment.

3. An adjustable steering column according to claim 1 or 2, **characterised in that** at least one portion (15) of the at least one front oblong hole (12) is curved and/or at least one portion (14) of the at least one front oblong hole (12) extends in a direction which is inclined both with respect to the direction (8) of the longitudinal adjustment and with respect to the direction (9) of the height or inclination adjustment, and **in that** at least one portion (18) of the at least one rear oblong hole (13) is curved and/or at least one portion (17) of the rear oblong hole (13) extends in a direction which is inclined both with respect to the direction (8) of the longitudinal adjustment and with respect to the direction (9) of the height or inclination adjustment.

4. An adjustable steering column according to any one of claims 1 to 3, **characterised in that** at least one locking element (22) of a locking device (3) is arranged on the front guide bolt (10), the adjusting part (2) being adjustable with respect to the holding part (1) over the adjustment path in the opened state of the locking device (3) and the adjusting part (2) being held in a non-adjustable manner with respect to the holding part (1) by the locking device (3) in the closed state of the latter.

5. An adjustable steering column according to claim 4, **characterised in that** the locking element (22) is adjusted in the direction of the longitudinal axis of the front guide bolt (10) upon opening and closing of the locking device (3).

6. An adjustable steering column according to any one of claims 1 to 5, **characterised in that** over the entire adjustment path, the end (5), at the steering-wheel side, of the steering spindle (4) simultaneously moves in the direction (8) of the longitudinal adjustment and is rotated about a virtual rotational axis.

7. An adjustable steering column according to claim 6, **characterised in that** the virtual rotational axis is at a greater distance from the end (5), at the steering-wheel side, of the steering spindle (4) than the rear guide bolt (11).

8. An adjustable steering column according to any one of claims 1 to 7, **characterised in that** adjacent to that adjustment-path end at which the steering spindle (4) has its shortest length there adjoins a crash path via which, in the event of a vehicle crash, the end (5), at the steering-wheel side, of the steering spindle (4) is displaceable, wherein the front and the rear guide bolts (10, 11) are displaceable in crash portions (16, 19) of the front and rear oblong holes (12, 13).

9. An adjustable steering column according to claim 8, **characterised in that** the crash portions (16, 19) run in the direction (8) of the longitudinal adjustment.

10. An adjustable steering column according to claim 8 or 9, **characterised in that** at least one stop (31, 31') limits that adjustment-path end in which the steering spindle (4) has its shortest length and deforms in the event of a crash and is thereby overcome.

11. An adjustable steering column according to claim 10, **characterised in that** at least one of the oblong holes (12, 13) has the stop (31, 31') which reduces the diameter of the oblong hole (12, 13) and which in the event of a crash is deformed by the guide bolt (10, 11) guided in this oblong hole (12,13).

12. An adjustable steering column according to any one of claims 8 to 11, **characterised in that** an energy absorption mechanism acts over at least part of the crash path and consumes energy in addition to the energy consumed by the overcoming of the locking device (3).

13. An adjustable steering column according to claim 12, **characterised in that** the energy absorption mechanism acts between at least one of the oblong holes (12, 13) and the guide bolt (10, 11) guided in this oblong hole.

14. An adjustable steering column according to any one of claims 1 to 13, **characterised in that** a lateral cheek (21 bearing the adjusting part (2), of the holding part (1) extends only on one side of the adjusting part (2).

## Revendications

1. Colonne de direction réglable pour un véhicule comportant une partie de retenue (1) pouvant être fixée à la carrosserie du véhicule et une partie de réglage (2) ajustable par rapport à la partie de retenue (1) qui loge de manière mobile en rotation, un tronçon de l'arbre de direction (4) qui se raccorde à l'extrémité (5) située côté volant de cet arbre de direction, pouvant être déplacée lors du réglage de la partie de réglage (2) par rapport à la partie de retenue (1) entre une première position d'extrémité et une seconde position d'extrémité sur une course de réglage, sur au moins une partie de la course de réglage, étant effectués, conjointement un réglage de l'extrémité située côté volant (5) dans la direction (8) d'un réglage en longueur de la colonne de direction, et dans la direction (9) d'un réglage en hauteur ou en inclinaison de la colonne de direction, dans une position de réglage respective de la partie de réglage (2) perpendiculaire à l'axe longitudinal du tronçon de l'arbre de direction (4) qui se raccorde à l'extrémité (5) située côté volant, et sur la partie de réglage (2) ou sur la partie de retenue (1) étant maintenue une broche de guidage avant (10) venant en prise dans au moins un perçage longitudinal avant (12) située dans l'autre de ces deux parties (1, 2), **caractérisée en ce qu'**
est en outre maintenue sur la partie de réglage (2) ou sur la partie de retenue (1) une broche de guidage arrière (11) située à une distance de l'extrémité (5) l'arbre de direction (4) située côté volant plus importante que la broche de guidage avant (10), et venant en prise dans au moins un perçage longitudinal arrière (13) situé dans l'autre de ces deux parties (1, 2), et dont la courbure et/ou la direction de son étendue se distingue(nt) sur au moins une partie de cette étendue de la courbure et/ou de la direction de l'étendue, correspondante du ou des perçage(s) longitudinal(aux) avant (12), et
au moins sur une partie de sa course de réglage, l'extrémité située côté volant (5) de l'arbre de direction (4) se déplace dans la direction (8) de réglage longitudinal, et tourne simultanément autour d'un axe de rotation virtuel qui est situé dans la zone d'un joint de Cardan (20) qui relie la partie de l'arbre de direction (4) se raccordant à l'extrémité (5) située côté volant à une autre partie de l'arbre de direction (4).

2. Colonne de direction réglable conforme à la revendication 1,
**caractérisée en ce que**
l'extrémité située côté volant (5) de l'arbre de direction (4) est située dans sa position la plus basse lorsque l'arbre de direction (4) est dans sa position déployée au maximum, et se déplace vers le haut, lors d'un déplacement de l'arbre de direction (4) vers sa position rétractée au maximum en plus d'un coulissement dans la direction (8) de réglage longitudinal.

3. Colonne de direction réglable conforme à la revendication 1 ou 2,
**caractérisée en ce qu'**
au moins un tronçon (15) du (des) perçage(s) longitudinal(aux) avant (12) est courbé, et/ou au moins un tronçon (14) du (des) perçage(s) longitudinal(aux) avant (12) s'étend dans une direction qui est inclinée par rapport à la direction (8) de réglage en longueur ainsi que par rapport à la direction (9) de réglage en hauteur ou en inclinaison, et au moins un tronçon (18) du (des) perçage(s) longitudinal(aux) arrière (13) est courbé et/ou au moins un tronçon (17) du perçage longitudinal arrière (13) s'étend dans une direction qui est inclinée par rapport à la direction (8) de réglage longitudinal ainsi que rapport à la direction (9) de réglage en hauteur ou en inclinaison.

4. Colonne de direction réglable conforme à l'une des revendications 1 à 3,
**caractérisée en ce que**
sur la broche de guidage avant (10) est monté au moins un élément de blocage (22) d'un dispositif de blocage (3) dans l'état ouvert duquel la partie de réglage (2) peut être réglée par rapport à la partie de retenue (1) sur la course de réglage, et par lequel, lorsqu'il est dans sa position fermée, la partie de réglage (2) est maintenue sans possibilité de réglage par rapport à la partie de retenue (1).

5. Colonne de direction réglable conforme à la revendication 4,
**caractérisée en ce que**
l'élément de blocage (22) est réglé lors de l'ouverture et de la fermeture du dispositif de blocage (3) en direction de l'axe longitudinal de la broche de guidage avant (10).

6. Colonne de direction réglable conforme à l'une des revendications 1 à 5,
**caractérisée en ce que**
sur la totalité de sa course de réglage l'extrémité située côté volant (5) de l'arbre de direction (4), se déplace dans la direction (8) de réglage en longueur et tourne simultanément autour d'un axe de rotation virtuel.

7. Colonne de direction réglable conforme à la revendication 6,
**caractérisée en ce que**
l'axe de rotation virtuel est situé à une distance plus importante de l'extrémité située côté volant (5) de l'arbre de direction (4) que la broche de guidage arrière (11).

8. Colonne de direction réglable conforme à l'une des revendications 1 à 7,
**caractérisée en ce que**
directement à l'extrémité de la course de réglage pour laquelle l'arbre de direction (4) présente sa longueur la plus faible, se raccorde une course de collision sur laquelle, dans le cas d'une collision de véhicules, l'extrémité située côté volant (5) de l'arbre de direction (4) peut se déplacer, les broches de guidage avant et arrière (10, 11) pouvant se déplacer dans des segments de collision (16, 19) des perçages longitudinaux avant et arrière (12, 13).

9. Colonne de direction réglable conforme à la revendication 8,
**caractérisée en ce que**
les tronçons de collision (16, 19) s'étendent dans la direction (8) de réglage en longueur.

10. Colonne de direction réglable conforme à la revendication 8 ou 9,
**caractérisée en ce qu'**
au moins une butée (31, 31') limite l'extrémité de la course de réglage pour laquelle l'arbre de direction (4) a sa longueur la plus faible, et se déforme en cas de collision, et est ainsi surmontée.

11. Colonne de direction réglable conforme à la revendication 10,
**caractérisée en ce qu'**
au moins l'un des perçages longitudinaux (12, 13) comporte la butée (31, 31') qui diminue le diamètre de ce perçage longitudinal (12, 13) et est déformée en cas de collision par la broche de guidage (10, 11) guidé dans ce perçage longitudinal (12, 13).

12. Colonne de direction réglable conforme à l'une des revendications 8 à 11,
**caractérisée en ce qu'**
au moins sur une partie de la course de collision, agit un mécanisme d'absorption d'énergie qui absorbe de l'énergie en plus de l'énergie absorbée lorsque l'installation de blocage (3) est surmontée.

13. Colonne de direction réglable conforme à la revendication 12,
**caractérisée en ce que**
le mécanisme d'absorption d'énergie agit entre au moins l'un des perçages longitudinaux (12, 13) et la broche de guidage (10, 11) guidée dans ce perçage longitudinal.

14. Colonne de direction réglable conforme à l'une des revendications 1 à 13,
**caractérisée en ce que**
sur un seul côté de la partie de réglage (2) s'étend une joue latérale (21) de la partie de retenue (1) qui porte cette partie de réglage (2).
